# EUROPÄISCHE PATENTSCHRIFT

(11) **EP 1 899 196 B1**
(45) Veröffentlichungstag und Bekanntmachung des Hinweises auf die Patenterteilung: **27.01.2010**
(21) Anmeldenummer: 06763144.0
(22) Anmeldetag: 15.05.2006
(51) Int. Cl.: B60R 1/00, B60R 11/04, H04N 7/18

(54) **NIGHTVISIONSYSTEM**
NIGHT VISION SYSTEM
SYSTEME DE VISION NOCTURNE

(30) Priorität: 01.07.2005 DE 102005030838
(43) Veröffentlichungstag der Anmeldung: 19.03.2008
(73) Patentinhaber: Continental Automotive GmbH, 30165 Hannover (DE)
(72) Erfinder: CIELER, Stephan, 60316 Frankfurt (DE); DONK, Vera, 64832 Babenhausen (DE); GRIMMEL, Reinfried, 61169 Friedberg (DE); SCHMIDT, Norbert, 65817 Eppstein (DE)
(86) Internationale Anmeldenummer: PCT/EP2006/062292
(87) Internationale Veröffentlichungsnummer: WO 2007/003463

(56) Entgegenhaltungen:
- EP-A- 1 391 769
- DE-A1- 19 950 033
- US-A1- 2005 074 221
- US-A1- 2005 110 621
- PATENT ABSTRACTS OF JAPAN Bd. 2003, Nr. 12, 5. Dezember 2003 (2003-12-05) & JP 2004 082918 A (ICHIKOH IND LTD), 18. März 2004 (2004-03-18)
- PATENT ABSTRACTS OF JAPAN Bd. 2003, Nr. 12, 5. Dezember 2003 (2003-12-05) & JP 2005 088630 A (NISSAN MOTOR CO LTD), 7. April 2005 (2005-04-07)
- PATENT ABSTRACTS OF JAPAN Bd. 2003, Nr. 12, 5. Dezember 2003 (2003-12-05) & JP 2004 291663 A (DENSO CORP), 21. Oktober 2004 (2004-10-21)

## Beschreibung

Die Erfindung betrifft ein Nightvisionsystem Nachtsichtsystem, bei dem eine Bilderfassungseinheit das Bild der Umgebung eines Kraftfahrzeuges aufnimmt, das aufgenommene Bild in einer Bildverarbeitungseinrichtung verarbeitet wird und in einer Anzeige dargestellt wird. Aus dem Stand der Technik sind derartige Systeme bekannt, bei dem Infrarotkameras als Bilderfassungseinheiten vorhanden sind und das von den Infrarotkameras aufgenommene Bild auf einem Display dargestellt wird. Hierbei weisen die Infrarotkameras spezifische Objektive auf, so dass die Darstellung auf dem Display auf einen bestimmten Blickwinkel fixiert ist. Hierdurch ist eine Anpassung des Bildausschnitts an eine aktuelle Fahraufgabe und das Informationsbedürfnis des Fahrers bzw. der Fahrerin nicht möglich.

Ein Nightvisionsystem nach dem Oberbegriff des Anspruchs 1 ist aus der DE-A-199 50 033 bekannt*.*

Aufgabe der Erfindung ist es daher, ein Nightvisionsystem der vorgenannten Art anzugeben, bei der der Bildausschnitt an die aktuelle Fahraufgabe und das Informationsbedürfnis des Fahrers angepasst wird. Diese Aufgabe wird von einem Nightvisionsystem mit den Merkmalen des Anspruchs 1 gelöst. Durch die Veränderung der Lage der Bilderfassungseinrichtung wird eine für die jeweilige Fahrsituation optimale Lage der Bilderfassungseinrichtung und damit der Anzeige der Umgebung des Kraftfahrzeuges erreicht. Besonders vorteilhaft ist es, die Bilderfassungseinrichtung in Abhängigkeit der gefahrenen Geschwindigkeit vertikal zu verschwenken. So wird im Stillstand und bei niedrigen Geschwindigkeiten die Bilderfassungseinrichtung so verschwenkt, dass der Bereich direkt vor dem Fahrzeug optimal wahrgenommen werden kann. Dies ist insbesondere bei Nutzfahrzeugen vorteilhaft, bei denen der Kraftfahrer bzw. die Kraftfahrerin sehr hoch über der Fahrbahn sitzen und den Bereich direkt vor dem Fahrzeug selbst trotz vorhandener Beleuchtung nicht einsehen können, da hier ein toter Winkel vorhanden ist. Mit zunehmender Geschwindigkeit orientieren sich die Kraftfahrer bzw. Kraftfahrerinnen üblicherweise in weiter entfernte Regionen vor dem Kraftfahrzeug, damit sie bei auftretenden Hindernissen entsprechend reagieren können. Deshalb wird bei zunehmender Geschwindigkeit die Bilderfassungseinrichtung vorteilhafterweise derart vertikal verschwenkt, dass sie weiter entfernte Objekte aufnehmen kann, die dann mittels der Anzeige darstellbar sind. Erfindungsgemäß liegen dem Nightvisionsystem Informationen über den Typ der befahrenen Straße vor, beispielsweise in dem es mit einem Navigationssystem gekoppelt ist, oder in dem die aufgenommenen Bilder entsprechend ausgewertet werden und ein entsprechender Straßentyp klassifiziert wird, und entsprechend dem Straßentyp wird die Bilderfassungseinheit entsprechend vertikal verschwenkt. Insbesondere derart, dass bei Straßentypen mit üblicherweise niedrigen Geschwindigkeiten die Bilderfassungseinheit derart eingestellt wird, dass der Bereich erfasst wird, der näher vor dem Kraftfahrzeug liegt, und bei Straßentypen, bei denen üblicherweise hohe Geschwindigkeiten gefahren werden, die Bilderfassungseinheit derart geschwenkt ist, dass entfernter liegende Objekte aufgenommen werden können. Wenn auch die horizontale Lage der Bilderfassungseinheit verändert wird, kann die Information weiter verbessert werden. Insbesondere, wenn die horizontale Lage der Bilderfassungseinheit in Abhängigkeit des Straßenverlaufs verändert wird. So können Objekte wahrgenommen werden, die sich nicht in gerader Linie vor dem Kraftfahrzeug befinden, sondern bei einem entsprechenden kurvigen Straßenverlauf an einer anderen Stelle auf der Straße befinden.

Als Bilderfassungseinheit kann vorteilhafter Weise eine Infrarotkamera Verwendung finden. Hierdurch können zum einen Objekte dargestellt werden, die sich im Bereich der normalen Scheinwerfer befinden. Auch ist es möglich, Objekte, die sich auch außerhalb des Bereiches von Scheinwerfern befinden können, durch ihre Wärmestrahlung zu erfassen und auf der Anzeige darzustellen.

Wenn eine Infrarotbeleuchtungsvorrichtung vorhanden ist, kann die Leistung der Infrarotkameras noch erhöht werden. Bei einer Ausgestaltung der Bilderfassungseinrichtung als Radar wird die Funktion bei schlechten Umwelteinflüssen, wie beispielsweise starkem Regen oder Schneefall, weniger gestört als bei einem Infrarotsystem.

Wenn die Anzeige als Head-up-Display ausgestaltet ist, wird der Fahrer bzw. die Fahrerin des Kraftfahrzeuges am wenigsten abgelenkt, da die Anzeige als virtuelles Bild auf die Windschutzscheibe des Kraftfahrzeuges projiziert wird und so die Anzeige gleichzeitig mit dem realen Geschehen vor dem Kraftfahrzeug wahrgenommen werden kann. Natürlich ist es auch möglich, die Anzeige als separates Bauteil vorzusehen und beispielsweise in der Mittelkonsole oder im Kombinationsinstrument des Kraftfahrzeuges vorzusehen. Dabei wird der Kraftfahrer aber gehindert, gleichzeitig direkt auf die Fahrbahn zu sehen.

Die Erfindung wird nachfolgend anhand der Figuren näher erläutert. Es zeigen:
- Figur 1: den Teil eines Kraftfahrzeuges mit einem Ausfüh- rungsbeispiel eines erfindungsgemäßen Nightvision- system,
- Figur 2: das Kraftfahrzeug aus Figur 1, bei dem die Bilder- fassungseinheit vertikal nach unten verschwenkt ist,
- Figur 3: das Kraftfahrzeug aus Figur 1, bei dem die Bilder- fassungseinheit des Nightvisionsystems vertikal nach oben verschwenkt ist.

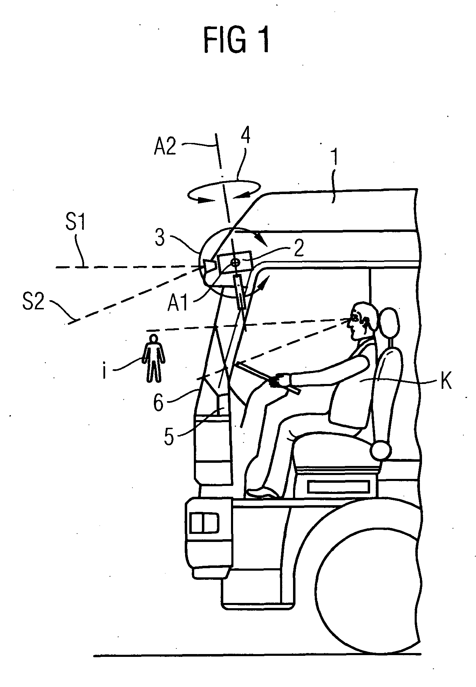

In Figur 1 erkennt man den Teil eines Kraftfahrzeuges 1 und einen Kraftfahrer K. Das Kraftfahrzeug weist eine Bilderfassungseinrichtung 2 auf, die vertikal um eine Achse A1 und horizontal um eine Achse A2 verschwenkbar ist, wie durch die Doppelpfeile 3, 4 verdeutlicht wird. Das Kraftfahrzeug 1 weist weiterhin eine Projektionseinheit eines Head-up-Displays 5 und eine Windschutzscheibe 6 auf. Das von der Bilderfassungseinrichtung 2 aufgenommene Bild wird entweder in einer nicht dargestellten Bildverarbeitungseinrichtung bearbeitet und über die Projektionseinheit 5 des Head-up-Displays auf die Windschutzscheibe 6 projiziert, oder direkt von der Bilderfassungseinrichtung 2 an die Projektionseinheit 5 des Head-up-Display übermittelt und dann auf die Windschutzscheibe 6 projiziert. Der Kraftfahrer kann das von der Bilderfassungseinrichtung 3 aufgenommene und auf die Windschutzscheibe 6 projizierte Bild als imaginäres Bild i wahrnehmen, das für den Kraftfahrer hinter der Windschutzscheibe 6 wahrnehmbar ist. Durch die Ausgestaltung als Head-up-Display kann der Kraftfahrer gleichzeitig die von der Bilderfassungseinrichtung aufgenommene Information und gleichzeitig die vor dem Kraftfahrzeug befindliche reale Umwelt wahrnehmen.

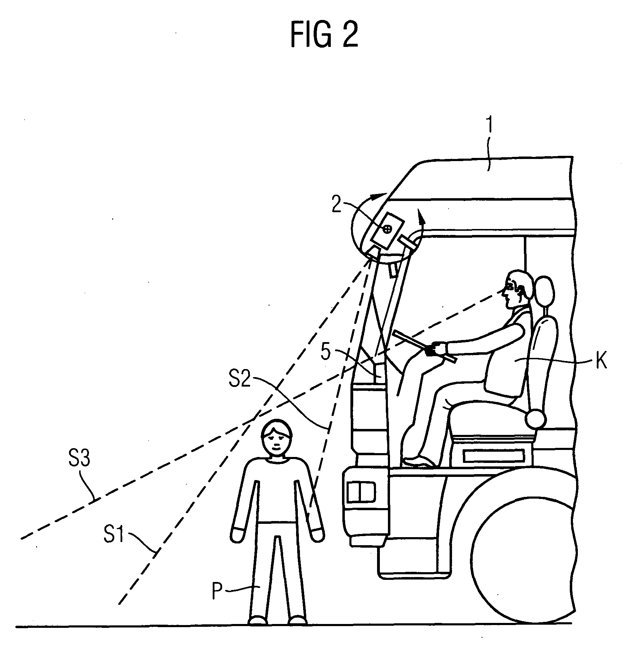

In Figur 2 erkennt man eine Person P, die sich direkt vor dem Kraftfahrzeug 1 aufhält und sich unterhalb der Linie S3 befindet, die den Sichtbereich des Kraftfahrers nach unten begrenzt. Somit befindet sich die Person P im toten Winkel und kann von dem Kraftfahrer K direkt nicht wahrgenommen werden. Da das Kraftfahrzeug steht, ist die Bilderfassungseinrichtung 2 vertikal nach unten geschwenkt, so dass ihr Erfassüngsbereich, der durch die Strahlen S1 und S2 begrenzt wird, die Realität direkt vor dem Kraftfahrzeug 1 aufnimmt. So wird die Person P über das Head-up-Display auf die Windschutzscheibe projiziert, und der Kraftfahrer kann wahrnehmen, dass sich vor seinem Kraftfahrzeug die Person P befindet.

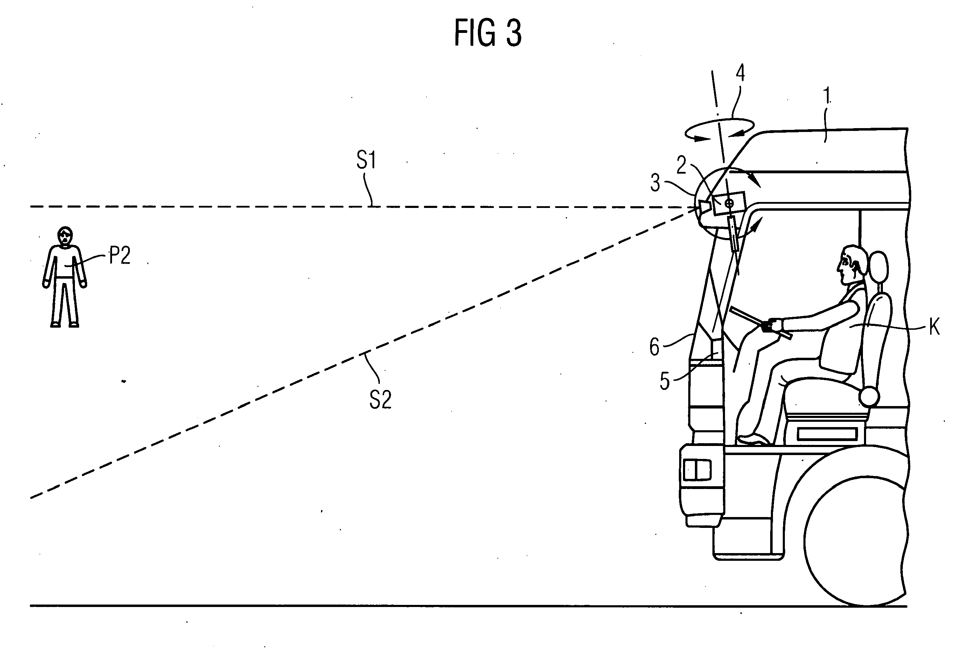

In Figur 3 weist das Kraftfahrzeug 1 eine mittlere Geschwindigkeit auf, so dass die Bilderfassungseinrichtung 1 eine nahezu waagerechte Position einnimmt, so dass sie den Bereich erfasst, der durch die Strahlen S1, S2 begrenzt wird. So kann sie das Bild der Person P2 aufnehmen. Das so aufgenommene Bild wird über die Projektionseinheit 5 des Head-up-Displays auf die Windschutzscheibe 6 projiziert, so dass der Kraftfahrer das Bild der Person als imaginäres Bild wahrnehmen kann, auch wenn sich die Person außerhalb der Reichweite der Scheinwerfer des Kraftfahrzeuges befindet. Die Erfindung kann selbstverständlich auch mit einer anderen Anzeige dargestellt werden. Hierbei muss der Kraftfahrer aber seinen Blick von der vor dem Fahrzeug befindlichen Fahrbahn nehmen, so dass er sich die real darstellende Wirklichkeit nicht gleichzeitig wahrnehmen kann.

## Patentansprüche

1. Nightvisionsystem; bei dem eine Bilderfassungseinheit das Bild der Umgebung eines Kraftfahrzeuges aufnimmt, das aufgenommene Bild mittels einer Anzeige dargestellt wird, wobei die Lage der Bilderfassungseinrichtung (2) in Abhängigkeit der Fahrsituation verändert wird, **dadurch gekennzeichnet, dass** die vertikale Verstellbarket der Bilderfassungseinrichtung (2) auch von dem befahrenen Straßentyp abhängt.

2. Nightvisionsystem nach Anspruch 1, **dadurch gekennzeichnet, dass** die Bilderfassungseinrichtung (2) in Abhängigkeit der gefahrenen Geschwindigkeit vertikal verschwenkt wird.

3. Nightvisionsystem nach einem der vorstehenden Ansprüche, **dadurch gekennzeichnet, dass** die horizontale Lage der Bilderfassungseinrichtung (2) verändert wird.

4. Nightvisionsystem nach Anspruch 3, **dadurch gekennzeichnet, dass** die horizontale Lage der Bilderfassungseinrichtung (2) in Abhängigkeit des Straßenverlaufs verändert wird.

5. Nightvisionsystem nach einem der vorstehenden Ansprüche, **dadurch gekennzeichnet, dass** die Bilderfassungseinrichtung (2) als Infrarotkamera ausgestaltet ist.

6. Nightvisionsystem nach Anspruch 5, **dadurch gekennzeichnet, dass** eine Infrarotbeleuchtungsvorrichtung vorhanden ist.

7. Nightvisionsystem nach einem der vorstehenden Ansprüche, **dadurch gekennzeichnet, dass** die Bilderfassungseinrichtung (2) als Radar ausgestaltet ist.

8. Nightvisionsystem nach einem der vorstehenden Ansprüche, **dadurch gekennzeichnet, dass** die Anzeige als Head-up-Display (5) ausgestaltet ist.

## Claims

1. Night vision system in which an image recording unit records the image of the surroundings of a motor vehicle, and the recorded image is displayed by means of a display, wherein the position of the image recording device (2) is changed as a function of the driving situation, **characterized in that** the vertical adjustability of the image recording device (2) also depends on the type of road on which the vehicle is traveling.

2. Night vision system according to Claim 1, **characterized in that** the image recording device (2) is pivoted vertically as a function of the speed at which the vehicle is traveling.

3. Night vision system according to one of the preceding claims, **characterized in that** the horizontal position of the image recording device (2) is changed.

4. Night vision system according to Claim 3, **characterized in that** the horizontal position of the image recording device (2) is changed as a function of the road profile.

5. Night vision system according to one of the preceding claims, **characterized in that** the image recording device (2) is embodied as an infrared camera.

6. Night vision system according to claim 5, **characterized in that** an infrared lighting device is present.

7. Night vision system according to one of the preceding claims, **characterized in that** the image recording device (2) is embodied as a radar.

8. Night vision system according to one of the preceding claims, **characterized in that** the display is embodied as a head-up display (5).

## Revendications

1. Système de vision nocturne dans lequel une unité de saisie de l'image enregistre l'image de l'environnement d'un véhicule automobile, reproduit l'image enregistrée au moyen d'un affichage, la position du dispositif d'enregistrement (2) de l'image variant en fonction de la marche du véhicule, **caractérisé par le fait que** la possibilité de modification dans le sens vertical du dispositif d'enregistrement (2) de l'image dépend également du type de la route parcourue.

2. Système de vision nocturne selon la revendication 1, **caractérisé par le fait que** le dispositif d'enregistrement (2) de l'image pivote dans le sens vertical en fonction de la vitesse de déplacement.

3. Système de vision nocturne selon l'une des revendications précédentes, **caractérisé par le fait que** la position horizontale du dispositif d'enregistrement (2) de l'image varie.

4. Système de vision nocturne selon la revendication 3, **caractérisé par le fait que** la position horizontale du dispositif d'enregistrement (2) de l'image varie en fonction du tracé de la route.

5. Système de vision nocturne selon l'une des revendications précédentes, **caractérisé par le fait que** le dispositif d'enregistrement (2) de l'image est réalisé sous la forme de caméra à infrarouge.

6. Système de vision nocturne selon la revendication 5, **caractérisé par le fait qu'**il existe un dispositif d'éclairage à infrarouge.

7. Système de vision nocturne selon l'une des revendications précédentes, **caractérisé par le fait que** le dispositif d'enregistrement (2) de l'image est réalisé sous la forme de radar.

8. Système de vision nocturne selon l'une des revendications précédentes, **caractérisé par le fait que** l'affichage est réalisé sous la forme de moniteur tête haute (5) (ou "Head-up display" en anglais).
